# EUROPEAN PATENT APPLICATION

(11) **EP 4 722 893 A1**
(43) Date of publication of application: **08.04.2026**
(21) Application number: 24810387.1
(22) Date of filing: 21.05.2024
(51) Int. Cl.: G06F 8/34

(54) **METHOD AND APPARATUS FOR APPLICATION PROCESSING, AND DEVICE AND STORAGE MEDIUM**

(30) Priority: 24.05.2023 CN 202310594216
(71) Applicant: Beijing Zitiao Network Technology Co., Ltd., Beijing 100190 (CN); Lemon Inc., Grand Cayman, KY1-1205 (KY)
(72) Inventor: WANG, Lei, Beijing 100028 (CN); ZHAO, Yi, Beijing 100028 (CN); GE, Jun, Beijing 100028 (CN); ZHANG, Yi, Los Angeles, California 90066 (US); SU, Huibin, Beijing 100028 (CN); CHEN, Zhangyi, Beijing 100028 (CN)
(74) Representative: Isarpatent
(86) International application number: PCT/CN2024/094426
(87) International publication number: WO 2024/240145

(57) **Abstract**

Embodiments in the disclosure provides a method, apparatus, device and storage medium for application processing. A method includes: receiving a first chat message from a user in a chat window of the user and a digital assistant, the first chat message indicating a user requirement for creating or adjusting a target application; determining, based on capability information related to an application processing capability of an application creation platform and interaction information in the chat window, a plurality of sub-requirements comprised in the user requirement; and performing the application processing operation associated with the plurality of sub-requirements in response to receiving a confirmation of the plurality of sub-requirements from the user. Therefore, the user requirements can be conveniently and clearly defined through interaction with the digital assistant in the application creation or adjustment process, and the user requirements are decomposed into specific sub-requirements that can be supported and implemented by the application creation platform. This helps to ensure the matching between user requirements and platform capabilities, improving the user experience.

## Description

This application claims the benefit of Chinese Patent Application No. 202310594216.4, filed on May 24, 2023, entitled "Method, Apparatus, Device, and Storage Medium for Application Processing," the entire content of which is incorporated herein by reference.

### TECHNICAL FIELD

Example embodiments in the disclosure generally relate to the field of computers, and in particular, to a method, apparatus, device, and computer-readable storage medium for application processing.

### BACKGROUND ART

With the rapid development of Internet technologies, various applications have become important tools in people's daily life. Different applications have different functions, and users can use specific applications with specific functions to achieve specific services. Application creation platforms, in particular low-code platforms, can support users to develop applications efficiently and realize operations like application creation, application function adjustment, and the like.

### SUMMARY

In a first aspect in the disclosure, a method for application processing is provided. The method includes: receiving a first chat message from a user in a chat window of the user and a digital assistant, the first chat message indicating a user requirement for creating or adjusting a target application; determining, based on capability information related to an application processing capability of an application creation platform and interaction information in the chat window, a plurality of sub-requirements comprised in the user requirement, the plurality of sub-requirements associated with an application processing operation provided by the application creation platform; and performing the application processing operation associated with the plurality of sub-requirements in response to receiving a confirmation of the plurality of sub-requirements from the user.

In a second aspect in the disclosure, an apparatus for application processing is provided. The apparatus includes: a message receiving module configured to receive a first chat message from a user in a chat window of the user and a digital assistant, the first chat message indicating a user requirement for creating or adjusting a target application; a sub-requirement determining module configured to determine, based on capability information related to an application processing capability of an application creation platform and interaction information in the chat window, a plurality of sub-requirements comprised in the user requirement, the plurality of sub-requirements associated with an application processing operation provided by the application creation platform; and an operation performing module configured to perform the application processing operation associated with the plurality of sub-requirements in response to receiving a confirmation of the plurality of sub-requirements from the user.

In a third aspect in the disclosure, an electronic device is provided. The apparatus includes at least one processing unit; and at least one memory coupled to the at least one processing unit and storing instructions for execution by the at least one processing unit. The instructions, when executed by the at least one processing unit, cause the electronic device to perform the method of the first aspect.

In a fourth aspect in the disclosure, a computer-readable storage medium is provided. The medium stores a computer program thereon, and the computer program is executable by the processor to implement the method of the first aspect.

It should be understood that the content described in this section is not intended to limit the key features or important features of the embodiments in the disclosure, nor is it intended to limit the scope of the disclosure. Other features in the disclosure will become readily understood from the following description.

### BRIEF DESCRIPTION OF DRAWINGS

The above and other features, advantages, and aspects of various embodiments in the disclosure will become more apparent from the following detailed description taken in conjunction with the accompanying drawings. In the drawings, the same or similar reference numbers refer to the same or similar elements, where:
FIG. 1 illustrates a schematic diagram of an example environment in which embodiments in the disclosure may be implemented;
FIG. 2 illustrates a flowchart of a method for application processing according to some embodiments in the disclosure;
FIG. 3A and FIG. 3B illustrate schematic diagrams of a chat window according to some embodiments in the disclosure;
FIG. 4 illustrates a schematic diagram of a chat window according to some other embodiments in the disclosure;
FIG. 5 is a schematic structural block diagram of an apparatus for application processing according to some embodiments in the disclosure; and
FIG. 6 illustrates a block diagram of an electronic device in which one or more embodiments in the disclosure may be implemented.

### DETAILED DESCRIPTION

Embodiments in the disclosure will be described in more detail below with reference to the accompanying drawings. While certain embodiments in the disclosure are shown in the accompanying drawings, it should be understood that the disclosure may be implemented in various forms, and should not be construed as limited to the embodiments set forth herein, but rather, these embodiments are provided for a more thorough and complete understanding of the disclosure. It should be understood that the drawings and embodiments in the disclosure are for example purposes only and are not intended to limit the scope of the disclosure.

In the description of the embodiments in the disclosure, the terms "including" and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

Herein, unless explicitly stated, "in response to A" performs one step and does not imply that this step is performed immediately after "A", but may include one or more intermediate steps.

It may be understood that the data involved in the technical solution (including but not limited to the data itself, the obtaining, using, storing or deleting of the data) should follow the requirements of the corresponding laws and regulations and related regulations.

It can be understood that before using the technical solutions disclosed in the embodiments in the disclosure, relevant users should be informed of the types, use ranges, usage scenarios, and the like of the information related to the disclosure in an appropriate manner according to relevant laws and regulations, and the authorization of the related users may be obtained, where the relevant users may include any type of rights body, such as individuals, businesses, and groups.

For example, when an active request of a user is received, prompt information is sent to the related user to explicitly prompt the related user, and the operation requested to be performed will need to obtain and use the information of the related user, so that the related user can autonomously select whether to provide information to software or hardware executing the operation of the technical solution in the disclosure according to the prompt information.

As an optional but non-limiting implementation, in response to receiving an active request of a related user, a manner in which prompt information is sent to the related user may be, for example, a pop-up window, and prompt information may be presented in a text manner in the pop-up window. In addition, the pop-up window may further carry a selection control for the user to select "agree" or "not agree" to provide information to the electronic device.

It may be understood that the foregoing notification and obtaining a user authorization process are merely illustrative, and do not constitute a limitation on implementations in the disclosure, and other manners of meeting related laws and regulations may also be applied to implementations in the disclosure.

In the early stage of development, a user may need to rely on a large amount of manual research to collect application requirements, and then input instructions indicating specific requirements into an application creation platform. This results in a large amount of manpower and high costs required for tradition solutions. In addition, if the user does not have sufficient knowledge of the application creation platform, it may be easy for some of the collected requirements to not be met by the platform, or for them to mistakenly believe that some requirements cannot be met by the platform. Therefore, in the application development cycle, how to accurately determine and meet specific user requirements for the application being developed is an important task.

According to embodiments in the disclosure, it is provided an improved solution for application processing in an application creation platform. According to the solution, a chat message indicating a user requirement is received from a user in a chat window of the user and a digital assistant. A plurality of sub-requirements associated with an application processing operation provided by the application creation platform is determined based on capability information related to an application processing capability of the application creation platform and the interaction information in the chat window, the plurality of sub-requirements are included in the user requirement. An application processing operation associated with the plurality of sub-requirements is performed in response to receiving a confirmation of the plurality of sub-requirements from the user. In this way, the user requirements can be conveniently and clearly defined through interaction with the digital assistant in the application creation or adjustment process, and the user requirements are decomposed into specific sub-requirements that can be supported and implemented by the application creation platform. This helps to ensure a match between user requirements and platform capabilities, improving the user experience.

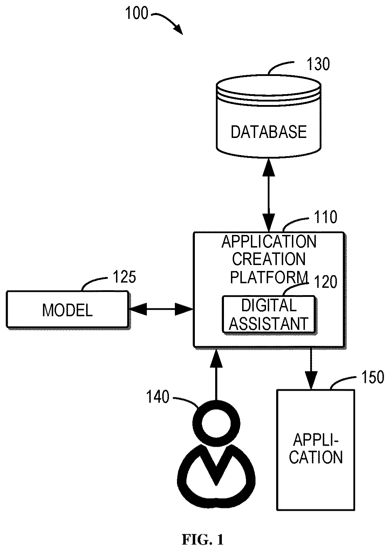

FIG. 1 illustrates a schematic diagram of an example environment 100 in which embodiments in the disclosure can be implemented. As shown in FIG. 1, an application creation platform 110 may provide an application development and deployment environment. In some embodiments, the application creation platform 110 may be a low-code platform that provides a collection of tools for application development. The application creation platform 110 may support visual development of applications, allowing developers to skip the manual encoding process and accelerate the application development cycle and cost. The application creation platform 110 may support any suitable platform for a user to develop applications, such as an application platform as a service (aPaaS) based platform.

The application creation platform 110 may run on a suitable electronic device. The electronic device herein may be any type of device having computing capability, including a terminal device or a server device. The terminal device may be any type of mobile terminal, fixed terminal, or portable terminal, including a mobile handset, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a pointing device, a television receiver, a radio broadcast receiver, an e-book device, a gaming device, or any combination of the foregoing, including accessories and peripherals of these devices, or any combination thereof. The server device may include, for example, a computing system/server, such as a mainframe, an edge computing node, a computing device in a cloud environment, or the like. In some embodiments, the application creation platform 110 may be implemented based on cloud services.

The application creation platform 110 may be deployed locally on a user's terminal device and/or may be supported by a remote server. In some embodiments, the terminal device may run a client of the application creation platform 110, and the client may support user interaction with the application creation platform 110. When the application creation platform 110 runs on the user's terminal device, the user may directly interact with the local application creation platform 110 by using the client. When the application creation platform 110 runs on the server device, the server device may implement, based on the communication connection with the terminal device, the service of the client running in the terminal device.

The application creation platform 110 may be deployed with a digital assistant 120. User 140 may interact with digital assistant 120 via application creation platform 110. The digital assistant 120 is used to dialogue with the user 140. A client of the application creation platform 110 may present an interaction window, such as a chat window, of the user 140 with the digital assistant 120 in the client interface. The digital assistant 120, as an intelligent assistant, has intelligent conversation and information processing capabilities. User 140 may input a chat message in the chat window, and digital assistant 120 provides a reply message in response to the user's chat message. In some embodiments, the chat message in the chat window may include a message in a multimodal form, such as a text message (e.g., natural language text), a voice message, an image message, a video message, or the like.

In the application creation platform 110, the digital assistant 120 may be invoked or awakened by an appropriate method (e.g., a shortcut, button, or voice) to present a chat window to the user. In some embodiments, the digital assistant 120 may be included in the contact list of the user as a contact, or included in an information stream of a chat component. By selecting the digital assistant 120, the chat window with the digital assistant 120 may be launched. In some embodiments, the digital assistant 120 may also be launched in one or more components supported by the application creation platform 110, presenting the chat window with the digital assistant 120.

The application creation platform 110 may obtain interaction information (including chat messages from the user and reply messages from the digital assistant 120) of the user 140 and the digital assistant 120 in the chat window. In some embodiments, the application creation platform 110 may understand the chat message of the user via a model 125 and determine a next operation to perform. The application creation platform 110 may provide model inputs to the model 125 via interaction with the model 125 and obtain corresponding model outputs from the model 125. The model 125 may locally run on the application creation platform 110 or on a remote server. In some embodiments, the model 125 may be a machine learning model, a deep learning model, a learning model, a neural network, or the like. In some embodiments, the model 125 may be based on a language model (LM). The language model may have question-answering capabilities by learning from a large amount of corpus. The model 125 may also be based on other suitable models.

The database 130 is configured to store data or information required for application processing operations to be performed by the application creation platform 110. For example, the database 130 may store code and description information corresponding to respective functional blocks that build the application. The application creation platform 110 may also perform operations such as invoking, adding, deleting, updating, and the like on the functional blocks in the database 130. Database 130 may also store operations that may be performed on different functional blocks. For example, in a scenario where the application 150 is to be created, the application creation platform 110 may invoke a corresponding function block from the database 130 to build up the application 150.

It should be understood that the structure and function of the environment 100 is described for the purpose of examples only and does not imply any limitation to the scope of the disclosure.

Some example embodiments in the disclosure will be described in detail below with reference to examples of the accompanying drawings.

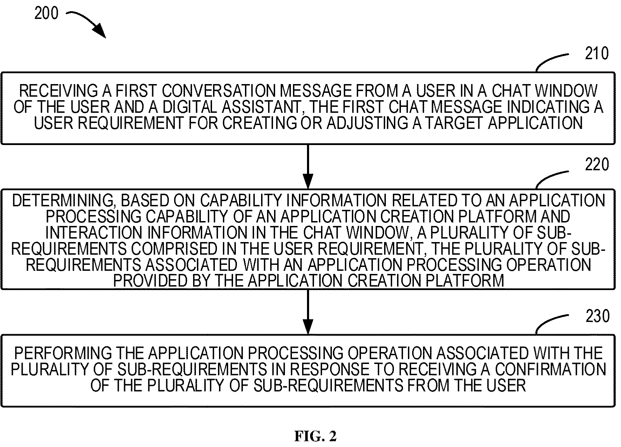

FIG. 2 shows a flowchart of a process 200 for application processing according to some embodiments in the disclosure. Process 200 may be implemented at the application creation platform 110. For ease of discussion, the process 200 will be described with reference to the environment 100 of FIG. 1.

At block 210, the application creation platform 110 receives a first chat message from a user 140 in a chat window of the user 140 with the digital assistant 120, the first chat message indicating a user requirement for creating or adjusting a target application.

In some embodiments, a client corresponding to the application creation platform 110 may present a chat window of the user 140 with the digital assistant 120 at the client interface. The chat window may be of any shape, any size, any color, or in any location. The chat window may include interface elements for information interaction, such as input boxes, message lists, message bubbles, and the like. The chat message may include content of one or more formats, such as text, image, audio, video, and the like. The digital assistant 120 may be used to interact with the user 140 during application creation or adjustment in the application creation platform 110. The first chat message received in the chat window may be a message inputted by the user 140 in an input box of the chat window or by other means (e.g., voice input, etc.). The user may indicate the requirement to develop a new application with the application creation platform, or to adjust an application being developed, through interactions with the digital assistant 120.

In some cases, the user requirement indicated by the first chat message cannot be accurately understood. For example, the first chat message received by the application creation platform 110 from the user 140 is "adjust the interface of the application A to be more beautiful", and the application creation platform 110 and/or the model 125 may not be able to determine how to adjust the interface based on the chat message. In this case, the application creation platform 110 cannot determine accurate sub-requirements based on the first chat message, which will result in the operation finally executed failing to meet the user requirement. In order to solve this problem, in the embodiments in the disclosure, by introducing a human-computer interaction mechanism, the interaction between the user and the digital assistant is used to help the application creation platform 110 and/or the model to define the problem domain of the user requirement.

Specifically, in block 220, the application creation platform 110 determines, based on the capability information related to the application processing capability of the application creation platform 110 and the interaction information in the chat window, a plurality of sub-requirements included in the user requirement, where the plurality of sub-requirements are associated with an application processing operation provided by the application creation platform 110.

In the embodiments in the disclosure, relatively general and broad user requirements are supported, and the user requirements may be clarified and decomposed into fine granularity through an interactive process. The determined sub-requirements after decomposing are the capabilities that the application creation platform 110 can implement. In this way, not only can it be ensured that the decomposed sub-requirements are what the user expects and is satisfied with, but also that the decomposed sub-requirements can be implemented on the application creation platform 110. In particular, for users that have insufficient application development capabilities and insufficient understanding of the specific capabilities of the application creation platform 110, the application development efficiency can be significantly improved.

In some embodiments, the capability information of the application creation platform 110 may describe the various application processing capabilities provided by the application creation platform 110 at various stages of application creation and application adjustment. In some embodiments, the capability information of the application creation platform 110 may indicate at least one of a plurality of candidate function blocks for constituting the application, or at least one candidate operation for a respective function block of the application. A candidate function block is considered to be a finer granularity module than an application, which as a whole can implement a specific function and can be called to build various applications. The application creation platform 110 may also provide different candidate operations for various functional blocks during application creation or application adjustment. Candidate operations include, but are not limited to, adjustment operations to invoke, add, modify, delete, etc. of functional blocks, adjust page layouts corresponding to the functional blocks, defining and modifying data tables, defining and modifying data flows, and the like.

In some embodiments, if the user requirement indicated by the first chat message is a user requirement indicating the creation of the target application, the application creation platform 110 may determine, based on the capability information of the application creation platform 110 and the interaction information in the chat window, a plurality of sub-requirements for creating the plurality of functional blocks of the target application. Each sub-requirement indicates that a corresponding function block is added as part of the target application. In some embodiments, after receiving the first chat message, the application creation platform 110 may use a preset screening policy to select, based on the user requirement indicated by the first chat message, the plurality of functional blocks that meet the user requirement from the database 130 including a large number of functional blocks Taking the example of creating a library management system application according to a user requirement, the application creation platform 110 may filter out book adding function blocks, book searching function blocks, book modifying function blocks, book deleting function blocks, borrowing function blocks, statistical report function blocks, etc. that may constitute the library management system application from the database 130 based on the user requirement. These functional blocks may be functional blocks that have been generated or will be generated by the application creation platform 110.

In some embodiments, where the user requirement indicated by the first chat message is a user requirement indicating the adjustment of the target application, the application creation platform 110 may determine at least one candidate operation on the respective functional blocks of the application 150 that meets the user requirement and may be implemented by the platform. Taking the example of adjusting the page layout corresponding to the function block A in the target application as indicated by the user requirement, the application creation platform 110 may determine at least one candidate operation that the platform itself can perform on the page layout of the function block A based on the user requirement, such as adding, deleting or shifting each operation control in the page.

In some embodiments, the application creation platform 110 may further decompose the user requirement using the model 125, and determine a plurality of sub-requirements included in the user requirement. The application creation platform 110 may generate a prompt input for the model 125 based on the chat message and the capability information in the interaction information from the user 140, where the prompt input describes at least a part of the user requirement indicated by the chat message and the capability information of the platform. Specifically, after the application creation platform 110 obtains the chat message from the user 140, at least part of capability information associated with the user requirement is determined from the capability information of the platform based on the user requirement indicated by the chat message. The application creation platform 110 may fill the chat message and the at least part of the capability information into an input template of the model 125 through prompt engineering to obtain a prompt input that conforms to the input form of the model 125. Further, after the application creation platform 110 generates the prompt input, the prompt input may be provided to the model 125 to obtain indications related to the plurality of sub-requirements from the model 125. The indications related to the plurality of sub-requirements may include, for example, names of a plurality of sub-requirements, identifiers, application processing operations associated with the plurality of sub-requirements, and the like. For example, if the plurality of sub-requirements correspond to a plurality of functional blocks for creating an application, the model 125 may indicate the functions implemented by the plurality of functional blocks, identifications of the plurality of functional blocks in the application creation platform 110, description of specific components in the functional blocks, and the like. If the plurality of sub-requirements correspond to a plurality of operations for adjusting an application, the model 125 may indicate names of the plurality of operations, goals to be achieved by the plurality of operations, specific implementations of the plurality of operations, and the like. In some embodiments, the indication provided by the model 125 may include an indication related to a candidate sub-requirement. The application creation platform 110 selects a plurality of sub-requirements based on the output from the model 125.

In the process of determining the plurality of sub-requirements included in the user requirement, the user may be allowed to interact with the digital assistant for one or more rounds to accurately determine the plurality of sub-requirements that meet the user's expectations. In some embodiments, after receiving the first chat message, the application creation platform 110 may combine the capability information of the application creation platform 110, determine a plurality of candidate sub-requirements of the user requirement based on the interaction information of the first round, and adjust the plurality of candidate sub-requirements based on the interaction information of at least one subsequent round to determine a plurality of sub-requirements included in the user requirement.

Specifically, the application creation platform 110 may determine, in response to the first chat message from the user 140, a plurality of candidate sub-requirements included in the user requirement based on the capability information. The application creation platform 110 may present, on the chat window, a reply message for the first chat message based on the determined plurality of candidate sub-requirements, where the reply message includes at least a description of the plurality of candidate sub-requirements. In this way, the user may know how the application creation platform 110 will implement the user requirement of application creation or modification.

In some embodiments, the determination of the plurality of candidate sub-requirements may also be implemented with the help of the model 125. The application creation platform 110 may generate a prompt input for the model 125 based on at least part of the first chat message and the capability information. The application creation platform 110 provides the prompt input to the model 125, and obtains, from the model 125, indications of a plurality of candidate sub-requirements that meets the user requirement. The application creation platform 110 may present the plurality of candidate sub-requirements to the user in the chat window of the user and the digital assistant for the user to confirm or input adjustment feedback.

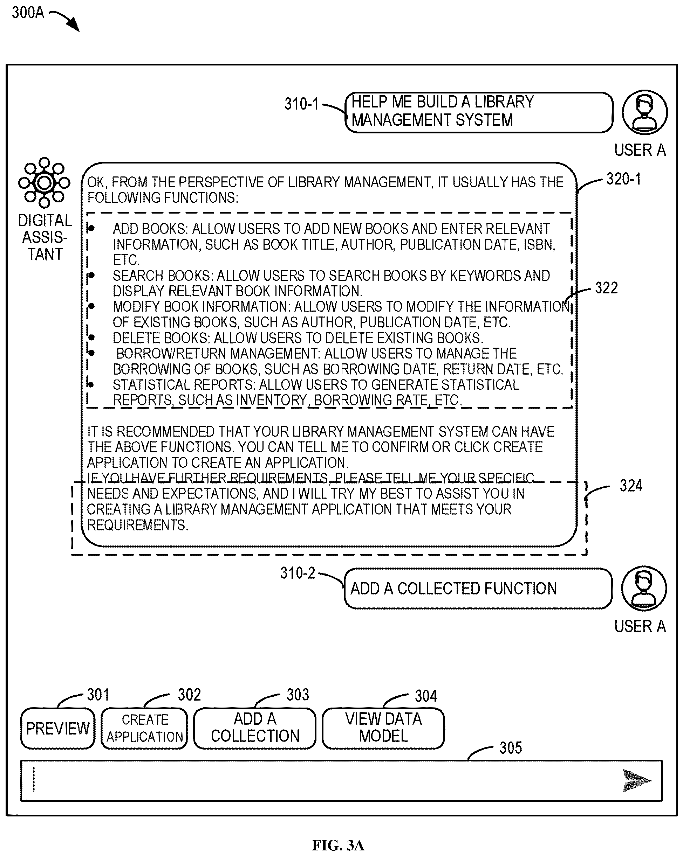

FIG. 3A illustrates a schematic diagram of a chat window 300A according to some embodiments in the disclosure. User A in the chat window 300A may be the user representation (e.g., name) in the chat window for user 140 in FIG. 1. User 140 is described below as user A. As shown in FIG. 3A, the application creation platform 110 may obtain a chat message 310-1 "help me build a library management system" from the user A in the chat window 300A. The chat message 310-1 is the first chat message. The application creation platform 110 may provide the chat message 310-1 together with its own capability information to the model 125.

In some embodiments, since the user requirement indicated by the chat message 310-1 is a user requirement for creating a target application, the capability information determined by the application creation platform 110 itself may indicate a plurality of candidate functional blocks for constituting the application 150. After the model 125 obtains the session message 310-1 and the capability information of the application creation platform 110, it may determine the plurality of functional blocks for constituting the target application from the plurality of candidate functional blocks indicated by the capability information based on the session message 310-1. The model 125 may determine a plurality of candidate sub-requirements corresponding to the plurality of functional blocks. The candidate sub-requirements and the functional blocks here may be in a one-to-one correspondence, for example, the sub-requirement of the statistical report may correspond to the statistical functional block.

In some embodiments, the application creation platform 110 may also provide the model with a sub-requirement determination policy together with the capability information and the session message 310-1. The sub-requirement determination policy here may enable the content output by the model 110 to conform to specifications of the application creation platform 110, or conform to specific requirements in a specific scenario. The sub-requirement determination policy may be customized, configured by the platform, or configured according to a specific application scenario. For example, the application creation platform 110 may configure the sub-requirement determining policy to limit the number of determined candidate sub-requirements, such as "the number of determined candidate sub-requirements does not exceed 10". The model 110 may determine a plurality of functional blocks for constituting the target application from a plurality of candidate functional blocks indicated by the capability information based on the sub-requirement determination policy and the chat message 310-1. Model 125 may determine the number of the plurality of functional blocks and, if the number is greater than 10, determine 10 functional blocks from the plurality of functional blocks, and in turn determine 10 candidate sub-requirements corresponding to the 10 functional blocks. The 10 functional blocks here may be randomly determined by the model 125 from the plurality of functional blocks, or may be determined based on a degree of association between the plurality of functional blocks and the user requirement. If the number is less than or equal to 10, the model 110 may determine a plurality of candidate sub-requirements corresponding to the plurality of functional blocks. By additionally providing the sub-requirement determination policy, the determination of sub-requirements by model 125 is more in line with the specific requirements of specific scenarios and specific platforms, so that the model output can be more effectively used to complete subsequent application processing.

The application creation platform 110 may obtain a plurality of candidate sub-requirements output by the model 125, and determine a reply message 320-1 for the chat message 310-1 based on the plurality of candidate sub-requirements. The application creation platform 110, in turn, presents the reply message 320-1 in the chat window 300A, which includes at least a description 322 of the plurality of candidate sub-requirements (i.e., a description of the corresponding functional blocks). It can be understood that the chat message 310-1 and the reply message 320-1 form the interaction information of the first round between the user A and the digital assistant.

In some embodiments, the chat window 300A further includes an input box 305 and a plurality of operation controls, for example, the plurality of operation controls may include a preview control 301, a generation application control 302, an add a collection control 303, and a view data model control 304. In some embodiments, the plurality of operation controls may be associated with interaction information in chat window 300A. For example, in the case where the interaction information is associated with the creation of an application, the operation control in the chat window 300A may include operation controls (e.g., an add a collection control 303) associated with the creation of the application. In the case where the interaction information is associated with the adjustment of an application, the operation controls in the chat window 300A may include operation controls (e.g., an adjust size control) associated with the adjustment of the application.

In some embodiments, the application creation platform 110 may further present a corresponding chat message in the chat window 300A in response to receiving a selection operation performed by the user A on a certain operation control. The selection operation may be, for example, a click, a long press, a sliding of the operation control, and the like. As shown in FIG. 3A, the application creation platform 110 may, in response to receiving a selection operation of the add a collection control 303, present a corresponding chat message 310-2 "add a collected function" in the chat window 300A. In some embodiments, the chat message 310-2 may also be a message input by the user A through the input box 305.

The application creation platform 110 may determine a plurality of sub-requirements based on user feedback on the reply message from the user 140. The user feedback here may include, for example, a user selection operation on a corresponding operation control in the chat window. For example, the application creation platform 110 may present, while presenting the reply message, an operation control associated with user feedback in the chat window, for example, adding a control, deleting a control, and the like. The application creation platform 110 may determine, in response to receiving a selection operation on a certain operation control, that corresponding user feedback is received (for example, in response to receiving a selection operation on an operation control indicating an addition of function A, determine that the user feedback of adding the sub-requirement is received, where the sub-requirement to be added indicates the addition of a function block corresponding to function A). The user feedback here may also include, for example, a chat message from the user 140 in the chat window in response to the reply message.

The application creation platform 110 may continue to receive further interaction information in the chat window, such as a second chat message from the user 140. If the second chat message includes a confirmation of the plurality of candidate sub-requirements, the application creation platform 110 may determine that the plurality of candidate sub-requirements is the sub-requirements desired by the user. If the second chat message includes adjustments of the plurality of candidate sub-requirements, the application creation platform 110 may adjust the plurality of candidate sub-requirements determined in the previous round based on the second chat message. Such an interaction process may be repeated for multiple rounds until the plurality of sub-requirements that meet the user requirement can be determined.

In some embodiments, the adjustment of the plurality of candidate sub-requirements includes at least one of: adding at least one new sub-requirement, deleting at least one candidate sub-requirement of the plurality of candidate sub-requirements, and modifying at least one candidate sub-requirement of the plurality of candidate sub-requirements. Taking the example that the plurality of candidate sub-requirements including sub-requirement A, sub-requirement B, and sub-requirement C, adding at least one new sub-requirement may be, for example, adding sub-requirement D, and the plurality of sub-requirements determined include sub-requirement A, sub-requirement B, sub-requirement C, and sub-requirement D. Deleting at least one candidate sub-requirement of the plurality of candidate sub-requirements may be, for example, deleting sub-requirement C, and the plurality of sub-requirements determined include only sub-requirement A and sub-requirement B. Modifying the at least one candidate sub-requirement of the plurality of candidate sub-requirements may include, for example, modifying sub-requirement A to sub-requirement A1, and the plurality of sub-requirements determined include sub-requirement A1, sub-requirement B, and sub-requirement C.

Similarly, in some embodiments, the application creation platform 110 may generate a prompt input based on the second chat message to provide to the model 125, and obtain the plurality of sub-requirements output by the model 125 that meet the adjustment of the plurality of candidate sub-requirements. In some embodiments, the second chat message includes not only the indication of the adjustment of the candidate sub-requirement, but also the description of the plurality of candidate sub-requirements output at the previous time. The application creation platform 110 may generate a prompt input for the model 125 based on the second chat message. Since each round of processing of the model 125 may always need to re-extract the context information of the interaction in order to understand the chat message input by the user, by explicitly indicating sufficient information such as the object to be adjusted (i.e., the plurality of candidate sub-requirements) and the specific adjustment target in the chat message, the model processing time may be significantly saved, and the efficiency of the overall requirement confirmation can be improved.

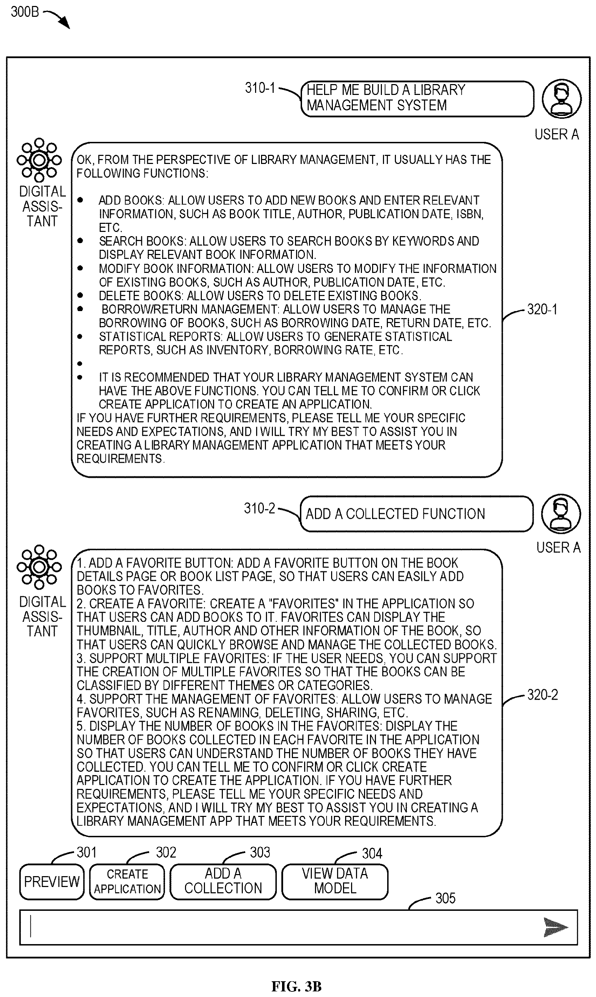

FIG. 3B illustrates a schematic diagram of a chat window 300B according to some embodiments in the disclosure. Similarly, user A in the chat window 300B may be the user representation of user 140 in the chat window in FIG. 1. As shown in FIG. 3B, the application creation platform 110 may obtain the chat message 310-2 "add a collected function" from the user A in the chat window 300B. The chat message 310-2 is the second chat message. The application creation platform 110 may provide the chat message 310-2 to the model 125. In some embodiments, application creation platform 110 may also identify the chat message 310-2 first and determine the capability information associated with chat message 310-2. The application creation platform may provide the capability information associated with the chat message 310-2 to the model 125 along with the chat message 310-2 (e.g., via a prompt built and provided to the model 125). In some examples, although not shown, the chat message 310-2 may also include a description of a plurality of second candidate sub-requirements given by the chat message 320-1.

The model 125 may determine, a type of the adjustment (i.e., addition, deletion, or modification, etc.) of the plurality of candidate sub-requirements indicated by the chat message 310-2 based on the chat message. After the model 125 determines that the chat message 310-2 indicates the addition of a sub-requirement, it may determine, in combination with the capability information associated with the chat message 310-2, at least one second candidate sub-requirement that meets the newly added sub-requirement. It should be noted that since the candidate sub-requirement corresponds to the function block, the second candidate sub-requirement here may correspond to the sub-function of the function block. The working process of the model 125 may be understood as a process of decomposing requirements. The model 125 may decompose the user requirement indicated by the first chat message into at least one candidate sub-requirement, and further decompose the sub-requirement indicated by the second chat message into at least one second candidate sub-requirement (that is, determine the function blocks that constitute the target application, and sub-functions that constitute the function blocks).

The application creation platform 110 may obtain a plurality of second candidate sub-requirements output by the model 125, and determine a reply message 320-2 to the chat message 310-2 based on the plurality of second candidate sub-requirements. The application creation platform 110, in turn, presents the reply message 320-2 in chat window 300B, the reply message 320-2 including at least a description of the plurality of second candidate sub-requirements. It can be understood that the chat message 310-2 and the reply message 320-2 form the interaction information of the second round between the user A and the digital assistant.

It may be understood that the application creation platform 110 may further obtain a third chat message, a fourth chat message, and the like from the user A in the chat window. Embodiments in the disclosure do not limit the number of rounds of the interaction. In this way, the application creation platform 110 can accurately decompose the user requirement into a plurality of sub-requirements based on the interaction information of the plurality of rounds between the user 140 and the digital assistant 120, which helps to improve the accuracy of subsequent application processing operations associated with the sub-requirements.

In some embodiments, the application creation platform 110 may adjust at least one candidate sub-requirement based on the plurality of rounds of chat messages to determine the plurality of sub-requirements. Further, in addition to decomposing the user requirement, in some embodiments, the application creation platform 110 may further decompose a certain sub-requirement based on the plurality of rounds of chat messages, which helps further improve the accuracy of the determined sub-requirements, thereby improving the user experience.

The foregoing describes an example in which the user requirement is to create a target application. Described below is the scenario where the user requirement is to adjust at least part of the target application. In some embodiments, if the user requirement is a user requirement indicating an adjustment of at least part of the target application, the application creation platform 110 may determine, based on the capability information of the application creation platform 110 and the interaction information in the chat window, a plurality of sub-requirements for adjusting the target application, where the plurality of sub-requirements at least indicate a plurality of operations for completing the adjustment of the target application. Similar to the case where the user requirement is a user requirement indicating the creation of the target application, the application creation platform 110 may also determine, in combination with the capability information of the application creation platform 110, a plurality of sub-requirements included in the user requirement based on the interaction information between the user 140 and the digital assistant 120.

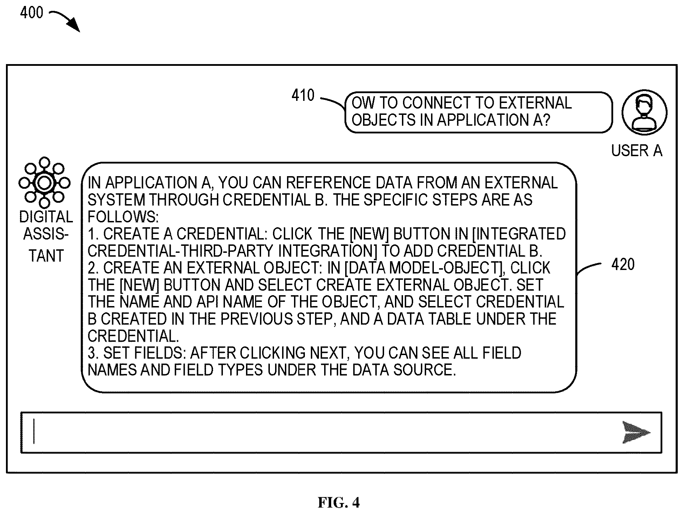

FIG. 4 shows a schematic diagram of a chat window 400 according to some embodiments in the disclosure. Similarly, user A in chat window 400 may be the user representation of user 140 in FIG. 1 in the chat window. As shown in FIG. 4, the application creation platform 110 may obtain the chat message 410 "how to connect an external object in application A?" in the chat window 400 from the user A. The application creation platform 110 may provide the capability information and the chat message 410 to the model 125, and obtain a plurality of candidate sub-requirements output by the model 125 that meet the user requirement and the platform capability information. Because the user requirement indicated by the chat message 410 is a user requirement indicating the adjustment of at least part of the target application (that is, the connection method of the application A with external systems), the determined capability information of the application creation platform 110 may indicate at least one candidate operation on the function block corresponding to the connection method of the application A with external systems. After obtaining the chat message 410 and the capability information of the application creation platform 110, the model 125 may determine, based on the chat message 410, at least one target operation on the function block from the plurality of candidate operations indicated by the capability information. The model 125 may determine a plurality of sub-requirements corresponding to the plurality of target operations. The sub-requirement and the target operation here may be in a one-to-one correspondence. The application creation platform 110 may obtain a plurality of sub-requirements output by the model 125, and determine a reply message 420 to the chat message 410 based on the plurality of sub-requirements. The application creation platform 110, in turn, presents the reply message 420 in the chat window 400A.

In some embodiments, the application creation platform 110 may also receive, in the chat window 400, a second chat message from user A indicating an adjustment to a plurality of candidate sub-requirements. Similarly, in some embodiments, the application creation platform 110 may provide the second chat message to the model 125 and obtain a plurality of sub-requirements output by the model 125 that meets the plurality of candidate sub-requirements obtained after adjusting the plurality of candidate sub-requirements. It may be understood that the application creation platform 110 may further obtain a third chat message, a fourth chat message, and the like from the user 140 in the chat window 400. Embodiments in the disclosure do not limit the number of rounds of interaction information.

In some embodiments, if the plurality of sub-requirements of the user requirement cannot be determined, the application creation platform 110 may present, in the chat window, a reply message indicating that the requirement cannot be determined. For example, if the first chat message from the user 140 is "How to make scrambled eggs with tomatoes?" and the application creation platform 110 determines that there are no sub-requirements that meet the user requirement, a reply message may be presented in the chat window as "Sorry, I'm an application creation assistant and cannot answer your question about scrambled eggs with tomatoes".

In some embodiments, if the user requirement indicated by the first chat message from user 140 is unclear, application creation platform 110 may present a clarification guidance for the user requirement in the chat window. For example, if the first chat message from the user is "help me make this interface more beautiful", the application creation platform 110 cannot determine how the user specifically wants to modify the interface, and may present a reply message "understood, but can you tell me in what way you want it to be more beautiful?" in the chat window.

Alternatively or additionally, in some embodiments, the application creation platform 110 may also add clarification guidance in any suitable reply messages to guide the user 140 to clarify the user requirement. Reference is made back to FIG. 3A. As shown in FIG. 3, the reply message 320 also includes clarification guidance 324 for user requirement. The clarification guidance 324 may guide the user to further describe the user requirement, and in the case where the candidate sub-requirements described in the reply message cannot fully meet the user requirement, the user is given an opportunity to further clarify (e.g., add or modify) the requirement to ensure the matching degree between the determined sub-requirements and the user requirement.

With continued reference to FIG. 2, at block 230, the application creation platform 110 performs an application processing operation associated with the plurality of sub-requirements in response to receiving a confirmation of the plurality of sub-requirements by the user 140.

In some embodiments, the application creation platform 110 may receive, at the chat window, a chat message from the user 140 indicating the confirmation of the plurality of sub-requirements. Taking the example where the user requirement indicates the creation of the target application, the chat message indicating that the plurality of sub-requirements are confirmed may be, for example, "confirm to create an application".

In some embodiments, the application creation platform 110 may further determine, in response to receiving the selection operation on an operation control indicating the creation of an application in the chat window, that the confirmation of the plurality of sub-requirements of the user 140 is received. Referring back to FIG. 3A, the application creation platform 110 may determine that confirmation of the plurality of sub-requirements is received in response to receiving a selection operation on the application creation control 302.

It should be noted that the plurality of sub-requirements here are the final sub-requirements determined by the multi-round adjustment. The application creation platform 110 may, in response to receiving the confirmation of the plurality of sub-requirements by the user 140, perform operations associated with the plurality of sub-requirements (e.g., create an application, adjust at least one component of the application, etc.). In some embodiments, the application creation platform 110 may store the obtained candidate sub-requirements in a form, and change the form in response to modifications to the candidate sub-requirements. The requirements finally stored in the form here are the plurality of sub-requirements that are finally determined to meet the user requirement. The application creation platform 110 may directly perform operations associated with the plurality of sub-requirements based on the form. Storing the sub-requirements in the form helps to avoid omissions in adjustments of a certain round and helps to ensure the accuracy of the sub-requirements that are finally determined. In some embodiments, the form may also be provided as capability information to the model 125.

In some embodiments, during and after the application creation platform 110 performs the operation, a final effect corresponding to the operation may be presented to the user 140 in response to a preview request of the user 140. For example, taking the creation of an application as an example, the application creation platform 110 can respond to a preview request from the user 140 and present the final created application to the user 140. Therefore, the user can conveniently change the application created by the user to ensure the matching degree between the finally generated application and the user.

According to an embodiment in the disclosure, a chat message indicating a user requirement is received from a user in a chat window of the user and a digital assistant. Based on the capability information related to the application processing capability of the application creation platform and the interaction information in the chat window, a plurality of sub-requirements associated with an application processing operation provided by the application creation platform and included in the user requirement is determined. An application processing operation associated with the plurality of sub-requirements is performed in response to receiving a confirmation of the plurality of sub-requirements from the user. In this way, the user requirements can be conveniently and clearly defined through interaction with the digital assistant in the application creation or adjustment process, and the user requirements are decomposed into specific sub-requirements that can be supported and implemented by the application creation platform. This helps to ensure the matching between user requirements and platform capabilities, improving the user experience.

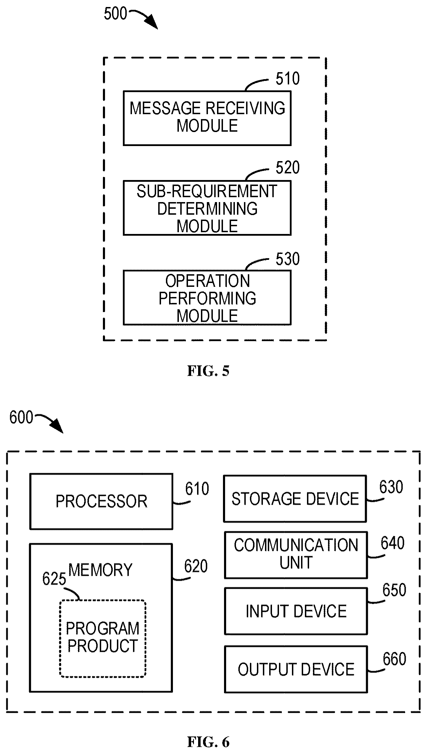

FIG. 5 is a schematic structural block diagram of an apparatus 500 for application processing according to some embodiments in the disclosure. The apparatus 500 may be implemented, for example, in or included in an application creation platform 110. The various modules/components in the apparatus 500 may be implemented by hardware, software, firmware, or any combination thereof.

As shown, the apparatus 500 includes a message receiving module 510 configured to receive a first chat message from a user in a chat window of the user and a digital assistant, the first chat message indicating a user requirement for creating or adjusting a target application. The apparatus 500 further includes a sub-requirement determining module 520, configured to determine, based on capability information related to an application processing capability of the application creation platform and the interaction information in the chat window, a plurality of sub-requirements included in the user requirement, where the plurality of sub-requirements are associated with an application processing operation provided by the application creation platform. The apparatus 500 further includes an operation performing module 530 configured to perform, in response to receiving a confirmation of the plurality of sub-requirements from the user, an application processing operation associated with the plurality of sub-requirements.

In some embodiments, the capability information indicates at least one of: a plurality of candidate function blocks for constituting the application, and at least one candidate operation for a corresponding function block of the application.

In some embodiments, the sub-requirement determining module 520 includes: a first prompt input generation module configured to generate a first prompt input for a model based on the first chat message and the capability information, the first prompt input describing the user requirement and at least part of the capability information; a first input providing module configured to provide the first prompt input to the model; and a first indication obtaining module configured to obtain an indication related to the plurality of sub-requirements from the model.

In some embodiments, the sub-requirement determining module 520 includes: a first sub-requirement determining module, configured to determine, based on the capability information of the application creation platform and the interaction information in the chat window, a plurality of sub-requirements for creating the target application if the user requirement indicates teh creation of the target application, the plurality of sub-requirements at least indicating a plurality of functional blocks for constituting the target application.

In some embodiments, the sub-requirement determining module 520 includes: a second sub-requirement determining module, configured to determine, based on the capability information of the application creation platform and the interaction information in the chat window a plurality of sub-requirements for adjusting the target application if the user requirement indicates the adjustment to at least part of the target application, the plurality of sub-requirements at least indicating a plurality of operations for completing the adjustment of the target application.

In some embodiments, the sub-requirement determining module 520 includes: a candidate sub-requirement determining module configured to determine, in response to the first chat message from the user, a plurality of candidate sub-requirements that meets the user requirement based on the capability information of the application creation platform; a reply message presenting module configured to present a reply message for the first chat message at the chat window, the reply message comprising at least a description of the plurality of candidate sub-requirements; and a third sub-requirement determining module configured to determine the plurality of sub-requirements based on user feedback from the user for the reply message.

In some embodiments, the third sub-requirement determining module includes: a second chat message receiving module, configured to receive a second chat message from the user in the chat window, the second chat message comprising at least an adjustment to the plurality of candidate sub-requirements; and a fourth sub-requirement determining module, configured to determine the plurality of sub-requirements based at least on the second chat message.

In some embodiments, the adjustment of the plurality of candidate sub-requirements includes at least one of the following: adding at least one new sub-requirement, deleting at least one candidate sub-requirement of the plurality of candidate sub-requirements, and modifying at least one candidate sub-requirement of the plurality of candidate sub-requirements.

In some embodiments, the second chat message further includes a description of the plurality of candidate sub-requirements. In some embodiments, the fourth sub-requirement determining module includes: a second prompt input generation module configured to generate a second prompt input for the model based on the second chat message; a second input providing module configured to provide the second prompt input to the model; and a second indication obtaining module configured to obtain an indication related to the plurality of sub-requirements from the model.

In some embodiments, the reply message further includes a clarification guidance for the user requirement to guide the user to clarify the user requirement.

In some embodiments, the application creation platform comprises an application platform as a service (aPaaS) based platform.

The modules included in the apparatus 500 may be implemented in various ways, including software, hardware, firmware, or any combination thereof. In some embodiments, one or more modules may be implemented using software and/or firmware, such as machine-executable instructions stored on a storage medium. In addition to or as an alternative to machine-executable instructions, some or all of the modules in the apparatus 500 may be implemented, at least in part, by one or more hardware logic components. By way of example and not limitation, example types of hardware logic components that may be used include field programmable gate arrays (FPGAs), application specific integrated circuits (ASICs), application specific standards (ASSPs), system-on-a-chip (SOCs), complex programmable logic devices (CPLDs), and the like.

FIG. 6 illustrates a block diagram of an electronic device 600 in which one or more embodiments in the disclosure may be implemented. It should be understood that the electronic device 600 illustrated in FIG. 6 is merely example and should not constitute any limitation on the functionality and scope of the embodiments described here. The electronic device 600 shown in FIG. 6 may be configured to run the application creation platform 110 of FIG. 1.

As shown in FIG. 6, the electronic device 600 is in the form of a general-purpose electronic device. Components of the electronic device 600 may include, but are not limited to, one or more processors or processing units 610, a memory 620, a storage device 630, one or more communication units 640, one or more input devices 650, and one or more output devices 660. The processing unit 610 may be an actual or virtual processor and capable of performing various processes according to programs stored in the memory 620. In multiprocessor systems, multiple processing units execute computer-executable instructions in parallel to improve parallel processing capabilities of electronic device 600.

Electronic device 600 typically includes a plurality of computer storage media. Such media may be any available media accessible to the electronic device 600, including, but not limited to, volatile and non-volatile media, removable and non-removable media. The memory 620 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 630 may be a removable or non-removable medium and may include a machine-readable medium, such as a flash drive, magnetic disk, or any other medium, which may be capable of storing information and/or data and may be accessed within electronic device 600.

The electronic device 600 may further include additional removable/non-removable, volatile/non-volatile storage media. Although not shown in FIG. 6, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 620 may include a computer program product 625 having one or more program modules configured to perform various methods or actions of various embodiments in the disclosure.

The communication unit 640 is configured to communicate with another electronic device through a communication medium. Additionally, the functionality of components of the electronic device 600 may be implemented in a single computing cluster or multiple computing machines capable of communicating over a communication connection. Thus, the electronic device 600 may operate in a networked environment using logical connections with one or more other servers, network personal computers (PCs), or another network node.

The input device 650 may be one or more input devices, such as a mouse, a keyboard, a trackball, or the like. The output device 660 may be one or more output devices, such as a display, a speaker, a printer, or the like. The electronic device 600 may also communicate with one or more external devices (not shown) through the communication unit 640 as needed, external devices such as storage devices, display devices, etc. , communicate with one or more devices that enable a user to interact with the electronic device 600, or communicate with any device (e.g., a network card, a modem, etc.) that enables the electronic device 600 to communicate with one or more other electronic devices. Such communication may be performed via an input/output (I/O) interface (not shown).

According to example implementations in the disclosure, there is provided a computer-readable storage medium having computer-executable instructions stored thereon, where the computer-executable instructions are executed by a processor to implement the method described above. According to example implementations in the disclosure, a computer program product is further provided, the computer program product being tangibly stored on a non-transitory computer-readable medium and including computer-executable instructions, the computer-executable instructions being executed by a processor to implement the method described above.

Aspects in the disclosure are described herein with reference to flowcharts and/or block diagrams of methods, apparatuses, devices, and computer program products implemented in accordance with the disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram (s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, functionality, and operation of possible implementations of systems, methods, and computer program products according to various implementations in the disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations in the disclosure have been described above, which are examples, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for application processing comprising:
receiving a first chat message from a user in a chat window of the user and a digital assistant, the first chat message indicating a user requirement for creating or adjusting a target application;
determining, based on capability information related to an application processing capability of an application creation platform and interaction information in the chat window, a plurality of sub-requirements comprised in the user requirement, the plurality of sub-requirements associated with an application processing operation provided by the application creation platform; and
performing the application processing operation associated with the plurality of sub-requirements in response to receiving a confirmation of the plurality of sub-requirements from the user.

2. The method of claim 1, wherein the capability information indicates at least one of:
a plurality of candidate functional blocks for constituting an application, and
at least one candidate operation for a corresponding functional block of the application.

3. The method of claim 1, wherein determining the plurality of sub-requirements comprises:
generating a first prompt input for a model based on the first chat message and the capability information, the first prompt input describing the user requirement and at least part of the capability information;
providing the first prompt input to the model; and
obtaining an indication related to the plurality of sub-requirements from the model.

4. The method of claim 1, wherein determining the plurality of sub-requirements comprises:
determining, based on the capability information of the application creation platform and the interaction information in the chat window, a plurality of sub-requirements for creating the target application if the user requirement indicates the creation of the target application, the plurality of sub-requirements at least indicating a plurality of functional blocks for constituting the target application.

5. The method of claim 1, wherein determining the plurality of sub-requirements comprises:
determining, based on the capability information of the application creation platform and the interaction information in the chat window, a plurality of sub-requirements for adjusting the target application if the user requirement indicates the adjustment to at least part of the target application, the plurality of sub-requirements at least indicating a plurality of operations for completing the adjustment of the target application.

6. The method of claim 1, wherein determining the plurality of sub-requirements comprises:
determining, in response to the first chat message from the user, a plurality of candidate sub-requirements that meets the user requirement based on the capability information of the application creation platform;
presenting a reply message for the first chat message in the chat window, the reply message comprising at least a description of the plurality of candidate sub-requirements; and
determining the plurality of sub-requirements based on user feedback from the user for the reply message.

7. The method of claim 6, wherein determining the plurality of sub-requirements based on the user feedback comprises:
receiving a second chat message from the user in the chat window, the second chat message comprising at least an adjustment to the plurality of candidate sub-requirements; and
determining the plurality of sub-requirements based at least on the second chat message.

8. The method of claim 7, wherein the adjustment of the plurality of candidate sub-requirements comprises at least one of:
adding at least one new sub-requirement,
deleting at least one candidate sub-requirement of the plurality of candidate sub-requirements, and
modifying at least one candidate sub-requirement of the plurality of candidate sub-requirements.

9. The method of claim 7, wherein the second chat message further comprises a description of the plurality of candidate sub-requirements, and wherein determining the plurality of sub-requirements comprises:
generating a second prompt input for the model based on the second chat message;
providing the second prompt input to the model; and
obtaining an indication related to the plurality of sub-requirements from the model.

10. The method of claim 7, wherein the reply message further comprises a clarification guidance for the user requirement to guide the user to clarify the user requirement.

11. The method of claim 1, wherein the application creation platform comprises an application platform as a service (aPaaS) based platform.

12. An apparatus for application processing comprising:
a message receiving module configured to receive a first chat message from a user in a chat window of the user and a digital assistant, the first chat message indicating a user requirement for creating or adjusting a target application;
a sub-requirement determining module configured to determine, based on capability information related to an application processing capability of an application creation platform and interaction information in the chat window, a plurality of sub-requirements comprised in the user requirement, the plurality of sub-requirements associated with an application processing operation provided by the application creation platform; and
an operation performing module configured to perform the application processing operation associated with the plurality of sub-requirements in response to receiving a confirmation of the plurality of sub-requirements from the user.

13. An electronic device comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 11.

14. A computer-readable storage medium having stored thereon a computer program executable by a processor to perform the method of any of claims 1 to 11.
